# FASCICULE DE BREVET EUROPEEN

(11) **EP 0 687 850 B1**
(45) Date de publication et mention de la délivrance du brevet: **26.08.1998**
(21) Numéro de dépôt: 94401367.1
(22) Date de dépôt: 17.06.1994
(51) Int. Cl.: F16L 59/06, F16L 59/02

(54) **Gaine d'isolation thermique pour canalisation et son procédé de fabrication**
Thermisch isolierte Umhüllung für eine Rohrleitung und Verfahren zu ihrer Herstellung
Thermal insulating covering for a pipeline and method for manufacturing the same

(43) Date de publication de la demande: 20.12.1995
(73) Titulaire: HUTCHINSON, F-75008 Paris (FR)
(72) Inventeur: Blin, Philippe, F-37260 Monts (FR); Mahin, Daniel, F-37510 Savonnieres (FR)
(74) Mandataire: Doireau, Marc

(56) Documents cités:
- EP-A- 0 041 252
- DE-A- 2 904 141
- DE-B- 1 225 929
- DE-C- 4 134 899
- GB-A- 719 638
- US-A- 3 060 069
- US-A- 3 275 038
- US-A- 4 218 814

## Description

L'invention concerne une gaine d'isolation thermique pour canalisation et son procédé de fabrication.

Les canalisations ou conduites dans lesquelles circulent un fluide à température différente de celle du milieu ambiant sont généralement munies de gaines les entourant et qui ont un double ou triple rôle à savoir, celui d'isolation thermique, celui de protection desdites conduites ou canalisations, mais également celui de protection du personnel qui peut être amené à circuler au voisinage de ces conduites ou canalisations lorsqu'elles sont placées au niveau du sol ou du plancher ou à hauteur d'homme.

Aussi a-t-on déjà proposé de garnir ces conduites ou canalisations de gaines en mousse de matière plastique, par exemple de PVC qui, si elles sont satisfaisantes eu égard à leur propriété d'isolation thermique, sont cependant mécaniquement fragiles, d'une part et, d'autre part, ne conviennent pas pour être mises en oeuvre dans des milieux confinés (galeries de mines, sous-marins, etc...) où on exige des gaines utilisées qu'elles présentent une certaine résistance au feu et qu'elles ne dégagent pas de fumées ou vapeurs toxiques en cas d'incendie. Pour de telles applications, les gaines usuelles en mousse de matière plastique sont par conséquent inappropriées et on utilise en leur lieu et place des enveloppes à base de mats de fibres de verre enrobés de résine, d'épaisseur relativement importante, mises en oeuvre et durcies in situ ou, en variante, rapportées sur des tronçons de canalisations dans des ateliers équipés pour cette tâche. Si les résultats obtenus sont satisfaisants, ce n'est soit qu'au prix d'une mise en oeuvre difficile lorsque l'enrobage des canalisations est effectué in situ, soit d'un très important travail de dépose des canalisations, de transport des lieux d'installation jusqu'aux ateliers de fabrication, et vice-versa, etc... de sorte que lorsqu'il s'agit d'équiper un bâtiment ou un navire comportant de très grandes longueurs de conduites ou canalisations de formes complexes, la mise en place de ces gaines d'isolation impose des contraintes considérables.

C'est, de ce fait, un but général de l'invention de fournir une gaine d'isolation thermique pour canalisation qui ne présente pas les inconvénients des gaines connues à base de mousse de matière plastique.

C'est, aussi, un but de l'invention de fournir une telle gaine d'isolation thermique propre à être mise en place sur la conduite ou canalisation qu'elle doit équiper sans que ladite conduite ou canalisation ait à être "emmaillotée" dans une enveloppe à base de mats de fibres de verre enrobés de résine.

C'est, encore, un but de l'invention de fournir une telle gaine d'isolation thermique pour canalisation qui soit souple et qui, de ce fait, puisse être mise en place sur la conduite ou canalisation qu'elle doit équiper en épousant la forme, souvent complexe, de ladite conduite ou canalisation.

C'est, également, un but de l'invention de fournir une gaine d'isolation thermique pour canalisation qui présente de bonnes qualités de résistance mécanique, dont l'encombrement pour la conduite ou canalisation qu'elle équipe ne soit pas supérieur à celui des dispositifs connus et qui, en outre, présente des qualités d'isolation au moins égales, si non meilleures à celles des dispositifs antérieurs.

C'est, enfin, un but de l'invention de fournir un procédé de fabrication d'une telle gaine.

Une gaine d'isolation thermique pour canalisation selon l'invention comprend un tube en un matériau du type élastomère compact et souple, destiné à venir au contact de la canalisation à isoler, et qui est conformé sur sa surface interne suivant une nervure hélicoïdale qui ménage entre ses spires adjacentes un "serpentin" rempli d'air ou de gaz lorsque la gaine est mise en place sur ladite canalisation en l'enserrant.

Une telle gaine est notamment divulguée par le document US-A-3,060,069, et le tube qui vient enserrer la canalisation peut comprendre également une grille textile de maintien et un renfort. Cependant, selon ce document, la nervure hélicoïdale est obtenue en déformant le tube sur toute son épaisseur pour former des ondulations.

Par contre, la gaine d'isolation thermique selon l'invention est caractérisée en ce que la nervure hélicoïdale est ménagée sur la surface interne du tube, en ce que la grille textile ou tissu de maintien est du type à déformation bi-élastique importante ou à grande déformabilité dans deux directions orthogonales, et en ce que le renfort est sous la forme d'un enroulement hélicoïdal monté dans le pas des spires de la nervure.

Le renfort peut être avantageusement constitué par un jonc de matière thermoplastique pour conférer à la gaine une bonne tenue mécanique, en particulier de résistance à l'écrasement.

Dans une forme de réalisation avantageuse de l'invention, la gaine comprend un revêtement externe d'élastomère, de préférence de caoutchouc silicone et, entre ledit revêtement externe et l'enroulement assurant la tenue à l'écrasement sont prévus successivement, à partir du revêtement externe et en direction de l'intérieur de la gaine :
. une tresse en fils de verre ; et
. une couche de matériau thermiquement isolant.

On obtient ainsi un produit souple, qui peut être courbé jusqu'à environ trois fois son diamètre et qui peut être enfilé sur les canalisations ou conduites qu'il doit équiper, même lorsque celles-ci ont une forme complexe, de sorte qu'est supprimé le travail difficile, -et qui ne peut être réalisé sur place-, "d'emmaillotage" des canalisations à l'aide de mats de fibres de verre et de résine ou produits analogues.

Dans une première exécution d'une gaine selon l'invention, la couche de matériau thermiquement isolant est du type papier de céramique ou analogue.

Dans une variante de réalisation, la couche de matériau thermiquement isolant est un mastic, sous forme de mousse relativement compacte, par exemple de silicone et de céramique, lequel peut être aisément découpé sans se détériorer.

La surface la plus interne de la nervure, -qui est au contact de la canalisation sur laquelle est montée la gaine-, est revêtue d'un tissu, du type à déformation bi-élastique importante dans deux directions orthogonales et qui est destiné à faciliter la mise en place de la gaine sur la canalisation par un effet de "glissement".

Lorsqu'une gaine selon l'invention doit être mise en place sur une canalisation dont les extrémités ne peuvent pas être désolidarisées des brides qui la maintiennent en place, l'invention prévoit de fendre ladite gaine longitudinalement et de munir les bords de la fente d'un moyen de fermeture (du type à glissière, ou à bandes de solidarisation mutuelle par velours/crochets ou d'un type analogue).

Pour une telle gaine fendue l'invention prévoit, avantageusement et complémentairement, de façonner une lèvre en même temps que le revêtement externe, lèvre qui peut être rabattue sur ledit moyen de fermeture pour le masquer après mise en place de la gaine sur la canalisation.

Un procédé de fabrication d'une gaine selon l'invention est alors caractérisé :
a) en ce que l'on dispose d'abord sur un mandrin et suivant un enroulement hélicoïdal à spires serrées, un élément profilé destiné à former le tube à nervure hélicoïdale de la gaine ;
b) en ce que l'on forme une ébauche dudit tube à l'aide d'un matériau de type élastomère à l'état pâteux;
c) en ce que l'on rapporte une grille textile sur la surface externe de l'ébauche du tube avant mise en place du jonc enroulé hélicoïdalement ;
d) en ce que l'on rapporte sur la surface externe de l'ébauche dudit tube un renfort assurant la tenue à l'écrasement de la gaine, avantageusement sous forme d'un enroulement hélicoïdal d'un jonc monté dans le pas des spires de l'élément profilé;
e) en ce que l'on dispose successivement sur l'ébauche dudit tube ainsi garnie un matériau thermiquement isolant et une tresse ;
f) en ce que l'on enferme l'ensemble formé dans un revêtement de matériau élastomère ;
g) en ce que l'on procède à la vulcanisation de l'ensemble ;
h) en ce que l'on extrait ensuite l'élément profilé mis en place au cours de l'étape a) ci-dessus et en ce que l'on dégage la gaine ainsi formée du mandrin. Dans un mode d'exécution du procédé, on prévoit encore :
i) de constituer le matériau thermiquement isolant par un papier, -avantageusement un papier de céramique ou analogue-, avec interposition entre lui et l'enroulement hélicoïdal du jonc de renfort d'une tresse en fils de verre.

Dans un autre mode d'exécution du procédé, on prévoit, après l'étape a) rapportée ci-dessus :
b') de disposer sur l'élément profilé un tissu à déformation bi-élastique importante dans deux directions orthogonales, posé en long avec léger recouvrement de ses bords ;
c') de rapporter sur ce tissu un renfort assurant la tenue à l'écrasement de la gaine sous la forme d'un enroulement hélicoïdal d'un jonc monté dans le pas des spires de l'élément profilé ;
d') de recouvrir le tissu et le jonc d'un film de matériau de type élastomère ;
e') de rapporter sur ce film de matériau de type élastomère le matériau isolant sous forme d'une mousse relativement compacte d'un mastic, avantageusement un mastic de silicone et de céramique ;
f') d'effectuer une réticulation de l'ensemble;
g') de disposer sur le mastic réticulé une tresse en fils de verre ;
h') d'enfermer l'ensemble formé dans un revêtement de matériau élastomère ;
i') d'effectuer une vulcanisation de l'ensemble ;
j') d'extraire ensuite l'élément profilé mis en place au cours de la première étape et de dégager la gaine formée du mandrin.

Quel que soit le procédé mis en oeuvre, l'invention envisage d'utiliser, de préférence, un caoutchouc silicone en tant que matériau constitutif du tube, du revêtement externe et des films intermédiaires lorsque ceux-ci sont présents.

Lorsque la gaine est du type fendu longitudinalement elle est soit fabriquée comme décrit ci-dessus au cours des étapes a) a h) ou a) à i) et est ensuite coupée le long d'une de ses génératrices, soit fabriquée comme décrit ci-dessus au cours des étapes a)-b') à g') ces étapes étant suivies de la coupe de l'ébauche comportant la tresse recouvrant le mastic thermiquement isolant le long d'une de ses génératrices, puis de la mise en place sur les bords de la fente des éléments de fermeture avant que ne soit rapporté le revêtement externe de matériau élastomère muni, le cas échéant, d'une lèvre pouvant être rabattue pour masquer les éléments de fermeture et vulcanisation de l'ensemble.

L'invention sera bien comprise par la description qui suit, faite à titre d'exemple et en référence au dessin annexé, dans lequel :
- la figure 1 est une vue en élévation, avec arrachement, d'une première forme de réalisation d'une gaine selon l'invention ;
- les figures 2 à 7 illustrent un procédé de fabrication d'une telle gaine ;
- les figures 8 et 9 illustrent des modes de mise en place d'une gaine selon l'invention sur des canalisations ;
- les figures 10 à 15 sont des vues analogues à celles des figures 2 à 7, mais pour une variante du procédé de fabrication ;
- la figure 16 est une vue schématique, en perspective, d'une gaine "fendue" selon l'invention ;
- la figure 17 en est une vue en coupe transversale, à plus grande échelle ;
- la figure 18 est une vue de détail d'une variante.

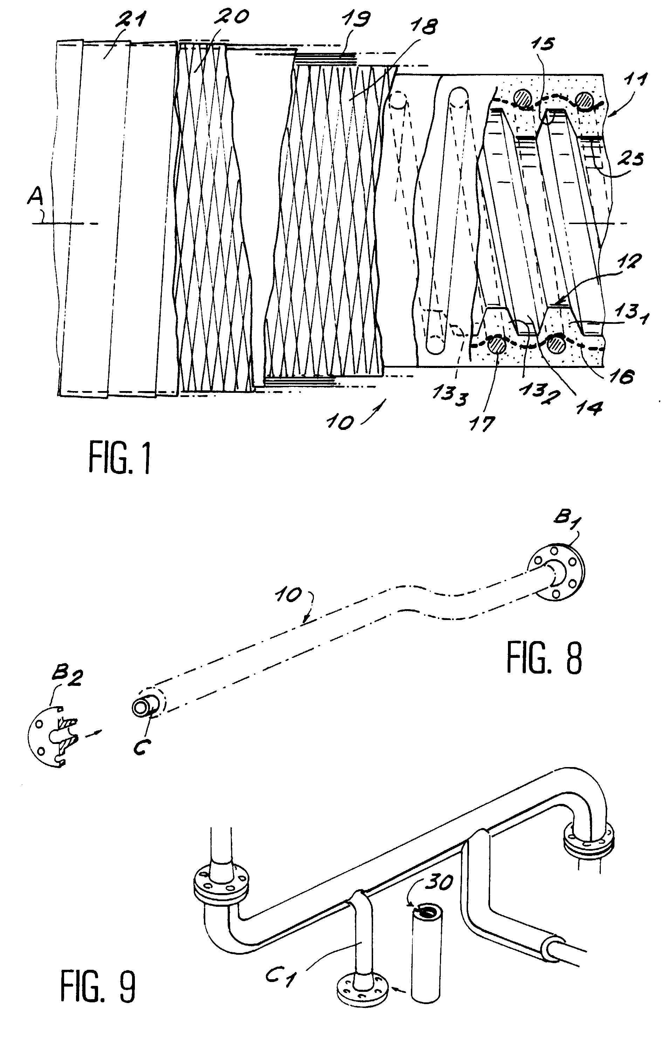

On se réfère d'abord à la figure 1 qui montre une première forme de réalisation d'une gaine d'isolation thermique pour canalisation selon l'invention, 10. De révolution autour de l'axe A, la gaine cylindrique 10 comprend essentiellement, de l'intérieur vers l'extérieur, les éléments suivants, étant bien entendu que ceux-ci forment un ensemble unitaire sans solution de continuité, détaillés ci-après dans un but explicatif uniquement :
i) un tube intérieur 11 en matériau élastomère, avantageusement du type des caoutchoucs siliconés et qui est conformé suivant une nervure hélicoïdale 12 limitant entre deux spires adjacentes 13₁, 13₂ ; 13₂, 13₃ ; etc... une gorge elle aussi hélicoïdale, ou "serpentin", 14, dont la section droite, -qui est également celle de la nervure 12-, est sensiblement trapézoïdale dans la forme de réalisation décrite et représentée ;
ii) une fine grille textile 16 disposée au voisinage du fond 15 de la gorge 14 ;
iii) un renfort 17, sensiblement au contact de la grille textile 16, noyé dans l'épaisseur du tube 11, destiné à assurer à la gaine une bonne résistance mécanique, en particulier une bonne tenue à l'écrasement, et qui est sous forme d'un jonc, avantageusement un rond de matière thermoplastique lui aussi disposé suivant un enroulement hélicoïdal mais à pas d'enroulement inverse de celui de la nervure 12 ;
iv) une première tresse en fils de verre, 18, qui contribue au maintien du renfort 17 et permet la courbure de la gaine ;
v) un matériau thermiquement isolant, 19, avantageusement un papier céramique accolé à la première tresse 18 et immobilisé sur la gaine par ;
vi) une seconde tresse en fils de verre, 20, laquelle est elle-même enfermée dans un revêtement extérieur 21 en matériau élastomère, avantageusement un caoutchouc siliconé du même type que celui constituant le tube interne 11.

Une telle gaine 10 est souple, peut être conformée suivant des rayons de courbure de l'ordre de trois fois son diamètre et, lorsqu'elle est rapportée sur une canalisation, assure un rôle d'isolation thermique à la fois par ses constituants et par l'air ou le gaz enfermé dans la gorge ou "serpentin" 14.

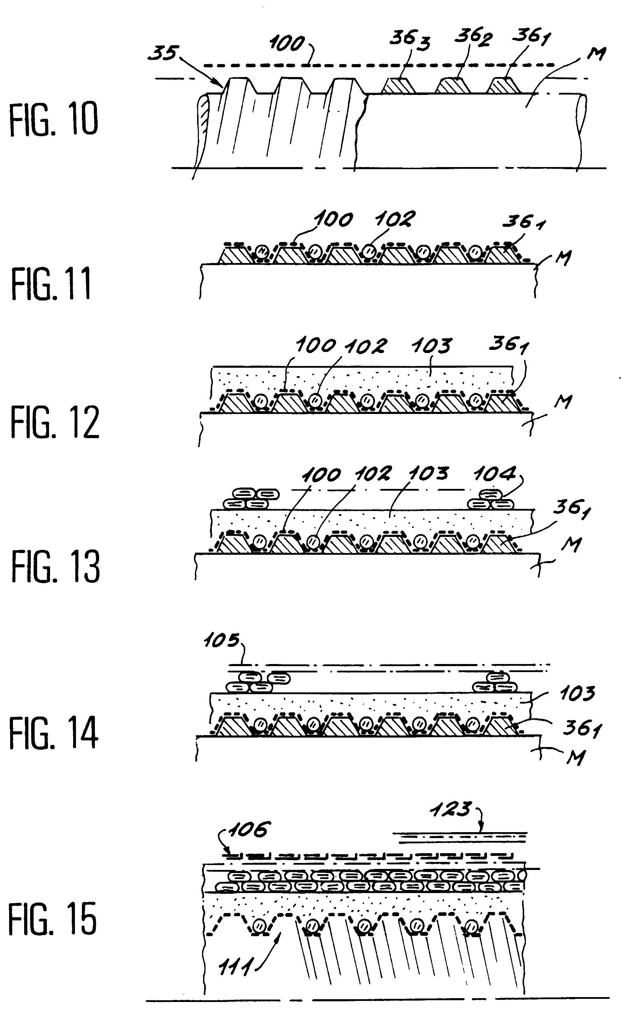

Comme montré sur la figure 8, une gaine selon l'invention, 10, est mise en place sur une canalisation C qu'elle est destinée à équiper simplement en enfilant la gaine sur la canalisation qui peut être fixée à une de ses extrémités à une bride B₁ puis, après mise en place de la gaine, à son autre extrémité par une bride B₂, la mise en place de la gaine 10 sur la canalisation C étant facilitée en rapportant sur la surface interne 25 de la nervure 12 un film lubrifiant ou analogue.

On constate qu'une gaine selon l'invention présente une excellente tenue à l'écrasement, joue parfaitement son rôle d'isolation thermique, ne transmet pas de bruit, et introduit un retard au feu important en cas d'incendie. Elle permet ainsi, comme montré sur la figure 9, d'équiper tout le système de canalisations ou de conduites d'une installation fixe ou mobile, par exemple celle d'un navire, sans avoir à démonter et traiter en usine lesdites canalisations ou conduites comme cela était nécessaire jusqu'à présent.

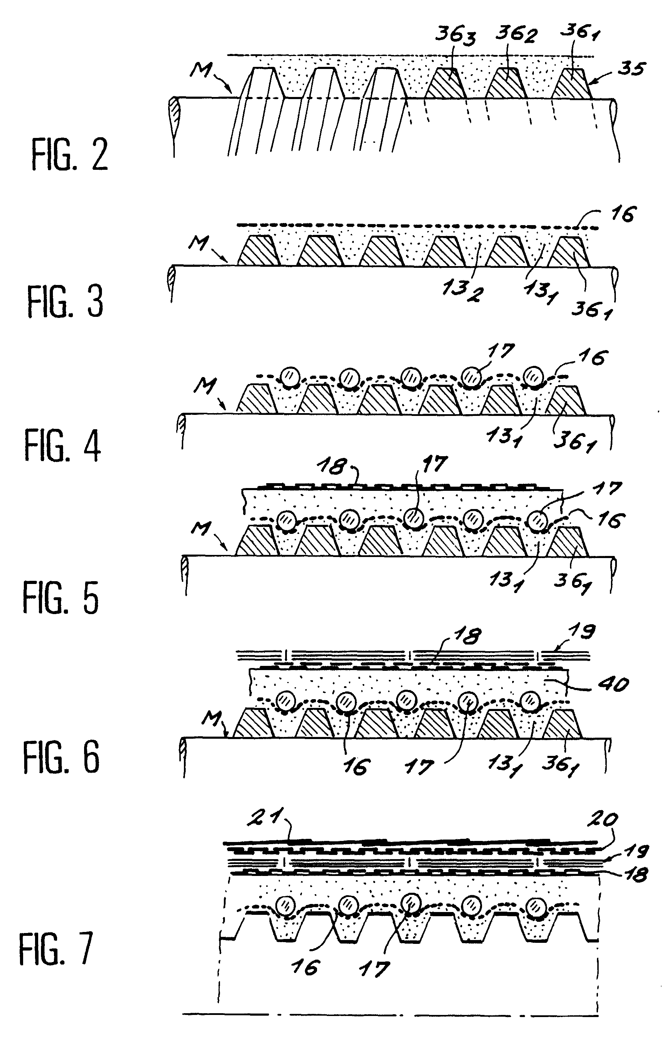

Pour la fabrication d'une gaine 10 telle que celle qui vient d'être décrite, l'invention propose un procédé selon lequel on rapporte d'abord sur un mandrin M, figure 2, un élément profilé 35 dont la section droite est celle de la gorge 14 et qui est placé sur ledit mandrin suivant un enroulement hélicoïdal à spires serrées 36₁, 36₂, etc... Sur le mandrin ainsi muni du profilé 35, avantageusement en un matériau thermoplastique, comme du PVC ou du polyéthylène, on rapporte alors un matériau élastomère pâteux, comme du caoutchouc siliconé lequel, en pénétrant dans les espaces limités par le mandrin M et les spires 36, forme l'ébauche du tube interne 11 de la gaine.

Sur l'ébauche ainsi formée est rapporté la grille textile 16, figure 3, puis sur ladite grille textile est mis en place le renfort 17, avantageusement un jonc rond en polyéthylène rigide lequel, en cas d'incendie, ne provoque pas de dégagement de chlore, figure 4.

Après que sur le renfort 17 a été rapportée une nouvelle couche de matériau élastomère 40, -destinée à former avec celle déjà mise en place la totalité du tube intérieur 11-, on dispose sur la surface externe de ladite couche 40 la première tresse 18, figure 5 puis, sur cette dernière, le papier isolant de céramique ou analogue, 19, figure 6. Sur ce papier est ensuite disposée la seconde tresse 20, figure 7, laquelle est elle-même garnie du revêtement extérieur 21 en matériau élastomère, avantageusement du caoutchouc siliconé comme celui du tube 11.

L'ensemble ainsi constitué est alors vulcanisé, de façon usuelle, puis le profilé 35 est extrait, -le plus simplement en tirant sur son extrémité libre-, comme montré sur la partie de droite de la figure 7 où il n'est plus apparent sur une première partie de gaine, alors qu'il est encore au contact du mandrin M sur la partie gauche de cette même figure.

Lorsque le mandrin M est retiré, on obtient la gaine 10 telle qu'illustrée sur la figure 1.

Etant donné qu'une gaine selon l'invention présente un effet "ressort" suffisant lorsqu'elle est fendue longitudinalement, comme montré en 30 sur la figure 9, elle peut aussi être mise en place sur une canalisation comme C₁, -dont les extrémités ne peuvent pas être désolidarisées des brides qui la maintiennent en place-, en faisant chevaucher la canalisation par la gaine fendue puis en solidarisant les deux bords de la fente par exemple à l'aide d'un moyen adhésif approprié.

Comme le matériau thermiquement isolant qui forme la couche 19 d'une gaine 10 du type de celle qui vient d'être décrite (papier céramique ou analogue) risque d'être détérioré lors de la découpe de ladite gaine pour constituer une gaine fendue, l'invention propose une autre réalisation d'une gaine selon l'invention et une variante d'exécution du procédé qui vient d'être décrit.

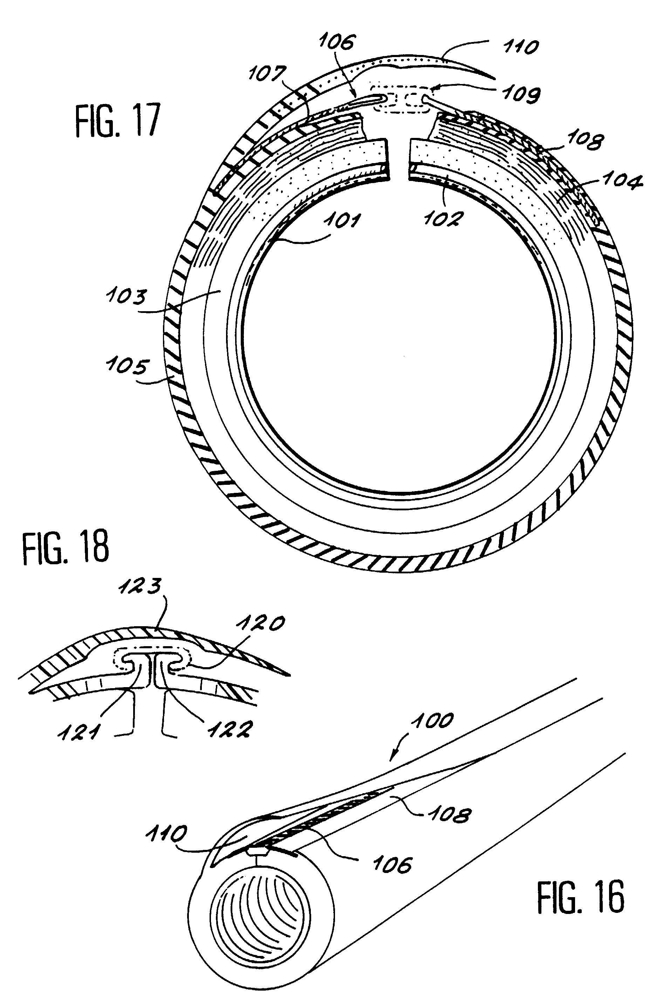

Dans cette variante de réalisation (figures 16 et 17), la gaine comprend essentiellement, de l'intérieur vers l'extérieur, les éléments suivants, étant bien entendu que ceux-ci forment un ensemble unitaire sans solution de continuité détaillés ci-après dans un but explicatif uniquement :
1) un tissu 100 du type à déformation biélastique importante (200 %) dans deux directions orthogonales, posé en long, avec léger recouvrement de ses bords et qui est destiné à faciliter la mise en place de la gaine sur la canalisation par un effet de glissement ;
2) un jonc 102 analogue au jonc 17 de la forme de réalisation précédente ;
3) une couche de matériau thermiquement isolant, 103, avantageusement sous forme d'une mousse relativement compacte d'un mastic de silicone et de céramique, obtenu par exemple à partir d'une matrice de caouchouc siliconé à laquelle sont ajoutées des fibres céramiques pour constituer un produit non toxique qui peut être coupé sans s'effriter ;
4) une tresse 104, en fils de verre ;
5) un revêtement extérieur 105 en matériau élastomère, avantageusement un caoutchouc siliconé ;
6) un moyen de fermeture 106, ménagé dans la forme de réalisation décrite et représentée par les deux brins 107 et 108 noyés dans le revêtement 105 d'une fermeture à glissière à curseur 109, laquelle est masquée, lorsque la gaine est rapportée sur une canalisation et que la glissière est fermée, par une lèvre 110 venue de fabrication avec le revêtement externe 105 de la gaine.

Pour la fabrication d'une telle gaine, l'invention propose une variante du procédé exposé ci-dessus suivant laquelle on rapporte d'abord sur le mandrin M, figure 10, l'élément profilé 35 dont la section droite est celle de la gorge 111 tapisée par le tissu 100 mis en place sur cet élément profilé et qui y est maintenu par le jonc 102, figure 11.

Après mise en place de ce jonc, on rapporte au pinceau sur la face externe du tissu 100 un film de caoutchouc silicone et sur ce film est mis en place la couche 103 de mastic de silicone et de céramique. On procède alors à une première réticulation, par exemple à l'aide d'un pistolet à air chaud, puis on dispose sur la couche isolante 103 réticulée et avec interposition d'un adhésif la tresse 104, figure 13. L'ébauche ainsi formée est alors coupée longitudinalement et est garnie du moyen de fermeture 106 et du revêtement externe 105 de caoutchouc siliconé avec lequel est simultanément formée la lèvre 110.

L'ensemble est ensuite vulcanisé, par exemple dans un autoclave, puis le profil 35 est extrait et la gaine retirée du mandrin M.

Dans une variante, non représentée, l'élément de fermeture 106 n'est pas une fermeture à glissière, mais une fermeture du type velours/crochets (Velcro) ou encore, dans une autre variante et comme montré sur la figure 18, un organe du type clips, 120, qui enserre des bourrelets 121 et 122 ménagés sur les bords fendus de la gaine, laquelle comporte, comme dans la réalisation des figures 16 et 17, une lèvre 123 propre à masquer ledit élément de fermeture.

### EXEMPLE A

On a fabriqué une gaine isolante 10 telle que décrite ci-dessus en rapportant sur un mandrin M de diamètre externe de 50 mm un élélement profilé à section droite trapézoïdale de 5 mm de hauteur, de petite base de 2 mm et de grande base de 4 mm enroulé à spires serrées au pas d'environ 4 mm.

Sur le mandrin M ainsi garni a été déposé du caoutchouc silicone suivant une épaisseur de 0,5 mm, puis, après mise en place d'une grille textile 16, une nouvelle couche de caoutchouc siliconé pâteux pour former un tube 11 d'une épaisseur de 5 mm. Dans te tube 11 est noyé un renfort 17 constitué par un rond de polyéthylène rigide d'un diamètre de 2,5 mm, lequel est enroulé au pas de 4 mm et à l'inverse des spires du premier profilé.

Après mise en place des tresses 18 et 19 et d'un papier isolant de 3 mm d'épaisseur, le revêtement externe 21 en caoutchouc siliconé d'une épaisseur de 2 mm est lui aussi mis en place avant vulcanisation de l'ensemble.

Lorsqu'une telle gaine est rapportée, par enfilage, sur un tube d'un diamètre externe de 48,3 mm, on constate une isolation thermique satisfaisante, avec un coefficient de conductibilité thermique de 0,08 W/m² 0°C.

Une gaine selon l'invention résiste à des températures de l'ordre de 250°C, supporte des chocs d'écrasement et peut être courbée à environ 3 fois son diamètre.

### EXEMPLE B

On a fabriqué une gaine isolante du type fendue, telle que décrite ci-dessus en référence aux figures 10 à 17, en rapportant sur un mandrin M de diamètre externe de 50 mm le même élément profilé à section droite trapézoïdale que celui mis en oeuvre dans l'exemple A. Sur le mandrin M ainsi garni est d'abord placé un tissu à déformation bi-élastique importante dans deux directions orthogonales posé en long, avec léger recouvrement de ses bords. Après dépôt d'une dissolution de silicone un renfort sous forme d'un rond de polyéthylène rigide d'un diamètre de 2,5 mm est enroulé hélicoïdalement comme dans l'exemple A ci-dessus. On met alors en place une couche de caoutchouc silicone d'une épaisseur d'environ 0,5 mm puis, sur cette couche, une mousse en un mastic de silicone et de céramique d'une épaisseur de 3 à 4 mm. L'ensemble est alors vulcanisé à l'air libre, et par un courant d'air chaud, ce qui provoque une légère expansion de la mousse.

L'ébauche de gaine est alors fendue longitudinalement puis, après mise en place d'une tresse, une nouvelle couche de caoutchouc siliconé d'une épaisseur comprise entre 1 et 2 mm, -munie, le cas échéant, d'un tissu-, est alors rapportée avant vulcanisation de l'ensemble.

## Revendications

1. Gaîne d'isolation thermique pour canalisation, du type comprenant un tube (11, 103) destiné à venir au contact de la canalisation (C) à isoler suivant une nervure hélicoïdale (12) qui ménage entre ses spires adjacentes un "serpentin" (14, 111) rempli d'air ou de gaz lorsque la gaîne est mise en place sur ladite canalisation en l'enserrant, ledit tube (11, 103) étant constitué en un matériau du type élastomère compact et souple, et comprenant au moins une fine grille textile ou tissu de maintien (16, 100) et un renfort, caractérisée en ce que la nervure hélicoïdale (12) est ménagée sur la surface interne du tube (11, 103), en ce que la grille textile ou tissu de maintien est du type à déformation bi-élastique importante ou à grande déformabilité dans deux directions orthogonales, et en ce que le renfort (17, 102) est sous la forme d'un enroulement hélicoïdal monté dans le pas des spires de la nervure (12).

2. Gaine d'isolation thermique selon la revendication 1, caractérisée en ce que le renfort (17, 102) est constitué par un jonc en matière thermoplastique.

3. Gaine d'isolation thermique selon la revendication 1 ou 2, caractérisée en ce qu'elle comprend un revêtement externe (21, 105) d'élastomère, de préférence de caoutchouc silicone et, entre ledit revêtement externe et l'enroulement (17) assurant la tenue à l'écrasement, successivement et à partir du revêtement externe en direction de l'intérieur de la gaîne :
. une tresse en fils de verre (20, 104) ; et
. une couche de matériau thermiquement isolant (19, 103).

4. Gaîne d'isolation thermique selon la revendication 3, caractérisée en ce que la couche de matériau thermiquement isolant (19) est du type papier de céramique ou analogue.

5. Gaîne d'isolation thermique selon la revendication 3, caractérisée en ce que la couche de matériau thermiquement isolant (103) est un mastic, sous forme de mousse relativement compacte, de silicone et de céramique.

6. Gaine d'isolation thermique selon l'une quelconque des revendications précédentes, caractérisée en ce qu'elle est fendue le long d'une de ses génératrices et en ce que les bords de la fente sont munis d'un moyen de fermeture (106).

7. Gaine d'isolation thermique selon la revendication 6, caractérisée en ce qu'elle comprend en outre une lèvre (110) propre à être rabattue sur le moyen de fermeture (106) pour le masquer après mise en place de la gaîne sur une canalisation (C) qu'elle doit équiper.

8. Procédé de fabrication d'une gaîne selon l'une quelconque des revendications précédentes, caractérisé en ce qu'il consiste :
- à disposer d'abord sur un mandrin (M) et suivant un enroulement hélicoïdal à spires serrées (36), un élément profilé (35) destiné à former le tube à rainure hélicoïdale de la gaîne ;
- à former une ébauche dudit tube à l'aide d'un matériau de type élastomère à l'état pâteux ;
- à rapporter une grille textile (16) sur la surface externe de l'ébauche du tube ;
- à rapporter sur la grille (16) un renfort (17) assurant la tenue à l'écrasement de la gaîne sous forme d'un enroulement hélicoïdal d'un jonc monté dans le pas des spires de l'élément profilé (35) ;
- à disposer successivement sur l'ébauche dudit tube ainsi garnie un matériau thermiquement isolant (19) et sur sa surface externe une tresse (20) ;
- à enfermer l'ensemble formé dans un revêtement (21) de matériau élastomère ;
- à procéder à la vulcanisation de l'ensemble ;
- à extraire ensuite l'élément profilé (35) ; et
- à dégager la gaîne ainsi formée du mandrin (M).

9. Procédé de fabrication d'une gaîne selon la revendication 8, caractérisé, en outre :
- en ce que l'on constitue le matériau thermiquement isolant (19) par un papier, -avantageusement un papier de céramique ou analogue-, avec interposition entre lui et l'enroulement hélicoïdal du jonc de renfort d'une tresse en fils de verre (20) ; et
- en ce que le matériau élastomère mis en oeuvre est un caoutchouc silicone.

10. Procédé de fabrication d'une gaîne selon l'une quelconque des revendications 1 à 7, caractérisé en ce qu'il consiste :
- à disposer d'abord sur un mandrin (M) et suivant un enroulement hélicoïdal à spires serrées (36), un élément profilé (35) destiné à former le tube à nervure hélicoïdal de la gaîne ;
- à disposer sur l'élément profilé un tissu (100) à déformation bi-élastique importante dans deux directions orthogonales, posé en long avec léger recouvrement de ses bords ;
- à rapporter sur ce tissu (100) un renfort (102) assurant la tenue à l'écrasement de la gaîne sous la forme d'un enroulement hélicoïdal d'un jonc monté dans le pas des spires de l'élément profilé (35) ;
- à recouvrer le tissu et le jonc d'un film de matériau élastomère, avantageusement un caoutchouc silicone ;
- à rapporter sur ce film de matériau élastomère le matériau isolant (103) sous forme d'une mousse relativement compacte d'un mastic de silicone et de céramique ;
- à effectuer une réticulation de l'ensemble ;
- à disposer sur le mastic réticulé une tresse en fils de verre (104) ;
- à enfermer l'ensemble formé dans un revêtement de matériau élastomère, comme du caoutchouc silicone ;
- à effectuer une vulcanisation de l'ensemble ;
- à extraire ensuite l'élément profilé (35) mis en place au cours de la première étape et on dégage la gaine formée du mandrin.

11. Procédé de fabrication d'une gaine du type fendue, par mise en oeuvre d'un procédé selon la revendication 10, caractérisé en ce qu'après dépôt de la tresse en fils de verre (104) on coupe l'ébauche le long d'une de ses génératrices, on met en place sur les bords de la fente des éléments de fermeture avant de rapporter le revêtement externe de matériau élastomère muni, le cas échéant, d'une lèvre (110) pouvant être rabattue pour masquer les éléments de fermeture (106) et on vulcanise l'ensemble.

## Patentansprüche

1. Hülse für thermische Isolation für eine Leitungsanlage, von der Art, welche ein Rohr bzw. einen Schlauch (11, 103) umfaßt, das bzw. der dazu bestimmt ist, mit der zu isolierenden Leitungsanlage (C) gemäß einer schrauben- bzw. spiralförmigen Rippe (12) in Kontakt zu kommen, welche zwischen ihren benachbarten Windungen eine "Schlange" (14, 111) ausgespart hat, die mit Luft oder Gas gefüllt ist, wenn die Hülse auf der Leitungsanlage montiert ist, indem sie diese bzw. dieses einschließt, wobei das Rohr bzw. der Schlauch (11, 103) aus einem Material vom Elastomertyp gebildet ist, das kompakt und weich bzw. schmiegsam ist und wenigstens ein feines Textilgitter bzw. -netz oder ein Sicherungsgefüge bzw. einen Sicherungsstoff (16, 100) und eine Verstärkung umfaßt, dadurch **gekennzeichnet** , daß die schrauben- bzw. spiralförmige Rippe (12) auf der inneren Oberfläche des Rohrs bzw. Schlauchs (11, 103) ausgespart ist, und daß das Textilgitter bzw. -netz oder das Sicherungsgefüge bzw. der Sicherungsstoff von dem Typ mit einer bi-elastischen wesentlichen Deformation oder einer großen Deformationsfähigkeit in zwei orthogonalen Richtungen ist, und daß die Verstärkung (17, 102) in der Form einer schrauben- bzw. spiralförmigen Wicklung ist, die in dem Gang der Windungen der Rippe (12) angebracht ist.

2. Hülse für thermische Isolation gemäß Anspruch 1, dadurch **gekennzeichnet** , daß die Verstärkung (17, 102) von einem Rohr bzw. einem Stab bzw. einer Stange bzw. einem Monofil aus thermoplastischem Material gebildet ist.

3. Hülse für thermische Isolation gemäß Anspruch 1 oder 2, dadurch **gekennzeichnet** , daß sie einen äüßeren Elastomermantel (21, 105), vorzugsweise aus Silikonkautschuk, und, zwischen dem äußeren Mantel und der Wicklung (17), welche die Widerstandsfähigkeit gegen Zusammendrücken sicherstellt, aufeinanderfolgend und ausgehend von dem äußeren Mantel in Richtung auf das Innere der Hülse:
. ein Geflecht aus Glasfasern bzw. -fäden (20, 104); und
. eine Schicht aus thermisch isolierendem Material (19, 103) umfaßt.

4. Hülse für thermische Isolation gemäß Anspruch 3, dadurch **gekennzeichnet** , daß die Schicht aus thermisch isolierenden Material (19) vom Typ Keramikpapier oder ähnlichem ist.

5. Hülse für thermische Isolation gemäß Anspruch 3, dadurch **gekennzeichnet** , daß die Schicht aus thermisch isolierendem Material (103) ein Kitt, in der Form von relativ kompaktem Schaum, aus Silikon und aus Keramik ist.

6. Hülse für thermische Isolation gemäß irgendeinem der vorhergehenden Ansprüche, dadurch **gekennzeichnet** , daß sie längs einer ihrer Mantellinien geschlitzt ist, und daß die Ränder des Schlitzes mit einem Verschlußmittel (106) versehen sind.

7. Hülse für thermische Isolation gemäß Anspruch 6, dadurch **gekennzeichnet** , daß sie außerdem eine Lippe (110) umfaßt, die dazu geeignet ist, auf das Verschlußmittel (106) herabgelassen bzw. umgeschlagen zu werden, um es abzudecken, nachdem die Hülse auf einer Leitungsanlage (C), die sie ausrüsten soll, montiert worden ist.

8. Verfahren zur Herstellung einer Hülse gemäß irgendeinem der vorhergehenden Ansprüche, dadurch **gekennzeichnet** , daß es sich aus folgendem zusammensetzt:
- zunächst Anordnen auf einem Dorn (M) und gemäß einer schrauben- bzw. spiralförmigen Wicklung mit geschlossenen bzw. dichten Windungen (36), eines profilierten Elements (35), das dazu bestimmt ist, das Rohr bzw. den Schlauch mit schrauben- bzw. spiralförmiger Rille der Hülse auszubilden;
- Ausbilden eines Rohlings des Rohrs bzw. Schlauchs mit Hilfe eines Materials vom Elastomertyp im pastösen Zustand;
- Aufsetzen eines Textilgitters bzw. -netzes (16) auf die äußere Oberfläche des Rohlings des Rohrs bzw. Schlauchs;
- Aufsetzen einer Verstärkung (17) auf das Gitter bzw. Netz, welche die Widerstandsfähigkeit gegen Zusammendrücken der Hülse sicherstellt, in der Form einer schrauben- bzw. spiralförmigen Wicklung eines Rohrs bzw. einer Stange bzw. eines Stabs bzw. eines Monofils, das bzw. die bzw. der in dem Durchgang bzw. Gang der Windungen des profilierten Elements (35) angebracht wird;
- aufeinanderfolgendes Anordnen auf dem Rohling des so ausgestatteten Rohrs bzw. Schlauchs, eines thermisch isolierenden Materials (19) und auf seiner äußeren Oberfläche eines Geflechts (20);
- Einschließen der gebildeten Gesamtheit in einer Hülle (21) aus Elastomermaterial;
- Übergehen zur Vulkanisation der Gesamtheit;
- danach Herausnehmen des profilierten Elements (35); und
- Loslösen der so gebildeten Hülse von dem Dorn (M).

9. Verfahren zur Herstellung einer Hülse gemäß Anspruch 8, außerdem **dadurch gekennzeichnet** :
- daß man das thermisch isolierende Material (19) durch ein Papier - vorteilhafterweise ein Papier aus Keramik oder ähnlichem - bildet, mit Zwischenfügung zwischen dasselbe und die schrauben- bzw. spiralförmige Wicklung des Rohrs bzw. der Stange bzw. des Stabs bzw. des Monofils der Verstärkung, eines Geflechts aus Glasfasern bzw. -fäden (20); und
- daß das benutzte Elastomermaterial ein Silikonkautschuk ist.

10. Verfahren zur Herstellung einer Hülse gemäß irgendeinem der Ansprüche 1 bis 7, **dadurch gekennzeichnet** , daß es sich aus folgendem zusammensetzt:
- zunächst Anordnen auf einem Dorn (M) und gemäß einer schrauben- bzw. spiralförmigen Wicklung mit dichten bzw. geschlossenen Windungen (36), eines profilierten Elements (35), das dazu bestimmt ist, das Rohr bzw. den Schlauch mit schrauben- bzw. spiralförmiger Rippe der Hülse auszubilden;
- Anordnen, auf dem profilierten Element, eines Gefüges bzw. Stoffs (100) mit wesentlicher bi-elastischer Deformation in zwei orthogonalen Richtungen, gelegt der Länge nach mit leichter Überlappung seiner Ränder;
- Aufsetzen einer Verstärkung (102) auf das Gefüge bzw. den Stoff (100), welche die Widerstandsfähigkeit gegen Zusammendrücken der Hülse sicherstellt, in der Form einer schrauben- bzw. spiralförmigen Wicklung eines Rohrs bzw. einer Stange bzw. eines Stabs bzw. eines Monofils, die in dem Durchgang bzw. Gang der Windungen des profilierten Elements (35) angebracht wird;
- Bedecken des Gefüges bzw. Stoffs und des Rohrs bzw. der Stange bzw. des Stabs bzw. des Monofils mit einem Film aus Elastomermaterial, vorteilhafterweise einem Silikonkautschuk;
- Aufsetzen, auf den Film aus Elastomermaterial, des isolierenden Materials (103) in der Form eines relativ kompakten Schaums eines Kitts aus Silikon und aus Keramik;
- Bewirken einer Vernetzung der Gesamtheit;
- Anordnen eines Geflechts aus Glasfasern bzw. -fäden (104) auf dem vernetzten Kitt;
- Einschließen der gebildeten Gesamtheit in einer Hülle aus Elastomermaterial, wie aus Silikonkautschuk;
- Bewirken einer Vulkanisation der Gesamtheit;
- danach Herausnehmen des profilierten Elements (35), das während des ersten Schritts eingefügt worden ist, und Loslösen der gebildeten Hülse von dem Dorn.

11. Verfahren zur Herstellung einer Hülse vom geschlitzten Typ, durch Ausführen eines Verfahrens gemäß dem Anspruch 10, dadurch **gekennzeichnet** , daß man nach der Ablage des Geflechts aus Glasfasern bzw. -fäden (104) den Rohling längs einer seiner Mantellinien aufschneidet, auf den Rändern des Schlitzes Verschlußelemente aufsetzt, und zwar vor dem Aufsetzen des äußeren Mantels aus Elastomermaterial, der gegebenenfalls mit einer Lippe (110) versehen ist, welche zum Abdecken der Verschlußelemente (106) herabgelassen bzw. umgeschlagen werden kann, und Vulkanisieren der Gesamtheit.

## Claims

1. Thermally insulating pipe lagging of the type comprising a tube (11. 103) designed to come into contact with the pipe (C) to be insulated along a helical rib (12) that leaves a "coil" (14, 111) between its adjacent turns, the coil being filled with air or gas when the lagging is in place surrounding said pipe, the tube (11, 103) being constituted by a material of the compact and flexible elastomer type, and including at least a fine textile grid or support cloth (16, 100) and reinforcement, the lagging being characterized in that the helical rib (12) is provided on the inside surface of the tube (11, 103), in that the textile grid or support cloth is of the type having considerable bi-elastic deformation or having great deformability in two orthogonal directions, and in that the reinforcement (17, 102) is in the form of a helical winding mounted in the pitch of the turns of the rib (12).

2. Thermally insulating lagging according to claim 1, characterized in that the reinforcement (17, 102) is constituted by a rod made of thermoplastic material.

3. Thermally insulating lagging according to claim 1 or 2. characterized in that it includes an outer covering (21, 105) of elastomer, preferably silicone rubber, and between said outer covering and the winding (17) that provides strength against crushing. successively and going from the outer covering towards the inside of the lagging;
a fiberglass braid (20, 104); and
a layer of thermally insulating material (19, 103).

4. Thermally insulating lagging according to claim 3, characterized in that the layer of thermally insulating material (19) is of the ceramic paper type, or the like.

5. Thermally insulating lagging according to claim 3. characterized in that the layer of thermally insulating material (103) is a mastic in the form of a relatively compact foam of silicone and of ceramic.

6. Thermally insulating lagging according to any preceding claim, characterized in that it is split along one of its generator lines and in that the edges of the split are provided with fastening means (106).

7. Thermally insulating lagging according to claim 6, characterized in that it also comprises a lip (110) suitable for being folded down over the fastening means (106) to hide it after the lagging has been put into place on a pipe (C) that is to be fitted therewith.

8. A method of manufacturing lagging according to any preceding claim. characterized in that it consists:
in initially disposing a section-bar element (35) on a mandrel (M) to follow a helical winding having close-together turns (36) for the purpose of forming the helical groove in the tube of the lagging;
in forming a blank of said tube by means of an elastomer type material in the pasty state;
in applying a textile grid (16) to the outer surface of the tube blank;
in applying reinforcement (17) serving to provide the lagging with strength against crushing to the grid (16) in the form of a helically wound rod mounted in the pitch of the turns of the section-bar element (35);
in disposing in succession on the blank of said tube equipped in this way a thermally insulating material (19) and, on the outside surface thereof, a braid (20);
in enclosing the resulting assembly in a covering (21) of elastomer material;
in vulcanizing the assembly; and
in then extracting the section-bar element (35); and
in disengaging the lagging formed in this way from the mandrel (M).

9. A method of manufacturing lagging according to claim 8. further characterized:
in that the thermally insulating material (19) is constituted by paper. advantageously ceramic paper or the like, with a fiberglass braid (20) being interposed between the paper and the helically wound rod; and
in that the elastomer material used is a silicone rubber.

10. A method of manufacturing lagging according to any one of claims 1 to 7, characterized in that it consists:
in initially disposing a section-bar element (35) on a mandrel (M) to follow a helical winding having close-together turns (36) for the purpose of forming the helical rib in the tube of the lagging;
in placing cloth (100) having considerable bi-elastic deformation in two orthogonal directions on the section-bar element, the cloth being placed lengthwise with its margins overlapping a little;
in applying reinforcement (102) serving to provide the lagging with strength against crushing to said cloth (100) in the form of a helically wound rod mounted in the pitch of the turns of the section-bar element (35);
in covering the cloth and the rod with a film of elastomer material, advantageously a silicone rubber;
in applying the insulating material (103) in the form of a relatively compact foam of a mastic of silicone and of ceramic to said film of elastomer material;
in cross-linking the assembly;
in disposing a fiberglass braid (104) on the cross-linked mastic;
in enclosing the assembly formed in a covering of elastomer material such as a silicone rubber;
in vulcanizing the assembly; and
in then extracting the section-bar element (35) installed during the first step and in disengaging the resulting lagging from the mandrel.

11. A method of manufacturing lagging of the split type by implementing a method according to claim 10, characterized in that after disposing the fiberglass braid (104), the blank is cut along one of its generator lines, fastening elements are put into place along the edges of the split before the outer covering of elastomer material is put into place, which covering is optionally provided with a lip (110) capable of being folded down to hide the fastener elements (106), and the assembly is vulcanized.
